(19) Europäisches Patentamt / European Patent Office / Office européen des brevets

(11) **EP 2 149 238 B1**

(12) **EUROPEAN PATENT SPECIFICATION**

(45) Date of publication and mention
of the grant of the patent:
**24.07.2013 Bulletin 2013/30**

(21) Application number: **08736465.9**

(22) Date of filing: **22.04.2008**

(51) Int Cl.:
*H04L 25/02* (2006.01)   *H04L 27/26* (2006.01)

(86) International application number:
**PCT/EP2008/054871**

(87) International publication number:
**WO 2008/129047 (30.10.2008 Gazette 2008/44)**

(54) **Method for channel estimation in ofdm systems**

Verfahren zur Kanalschätzung in OFDM-Systemen

Procédé d'estimation de canal dans des systèmes de multiplexage par répartition orthogonale de la fréquence (ofdm)

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **23.04.2007 EP 07106730**

(43) Date of publication of application:
**03.02.2010 Bulletin 2010/05**

(73) Proprietor: **Abilis Systems Sarl**
**1228 Plan-Les-Ouates (CH)**

(72) Inventors:
• **TOMASIN, Stefano**
**I-35131 Padova (IT)**
• **BUTUSSI, Matteo**
**CH-1218 Grand-Saconnex (CH)**
• **LATTUADA, Mauro**
**CH-1007 Lausanne (CH)**
• **RUPPERT, Christian Alexander**
**CH-1212 Genève (CH)**
• **MATHYS, Yves**
**CH-1233 Bernex (CH)**

(74) Representative: **P&TS SA (AG, Ltd.)**
**Av. J.-J. Rousseau 4**
**P.O. Box 2848**
**2001 Neuchâtel (CH)**

(56) References cited:
**EP-A- 1 401 164     EP-A- 1 530 333**
**WO-A-2005/117381     US-A1- 2003 128 656**
**US-B1- 7 161 896**

**Description**

Reference data

This application claims priority of European patent application EP07106730 of April 23, 2007.

Field of the invention

The present invention concerns a method and a device for estimating the channel frequency-response matrix in an OFDM receiver or in an OFDM system, as well as a receiver comprising such device or implementing such method.

Description of related art

Orthogonal Frequency Division Multiplexing modulation (OFDM or COFDM) is a digital multi-carrier modulation method in which the transmitted data is divided into several parallel channels, which are carried by a large number of closely-spaced orthogonal sub-carriers. OFDM is increasingly employed in wired or wireless wideband digital communication, also thanks to its ability to accommodate with variable or poor channel conditions. Among others, OFDM schemes are used in broadband interned (DSL) and digital television and audio broadcasting (DVB and DAB). In the following reference will be made, to exemplify the invention, to the DVB standard. It must be intended, however, that this is not a limiting feature of the invention, which includes all ODFM modulation systems requiring a channel estimation, be they used for broadcast or data transmission, on a radio channel, or on a wired channel, or any other suitable transmission channel. The present invention could be applied to other digital television system, and also to wireless networks (HIPERLAN, WiMax), digital radio systems, ADSL, VDSL and PLC data networks, and so on.

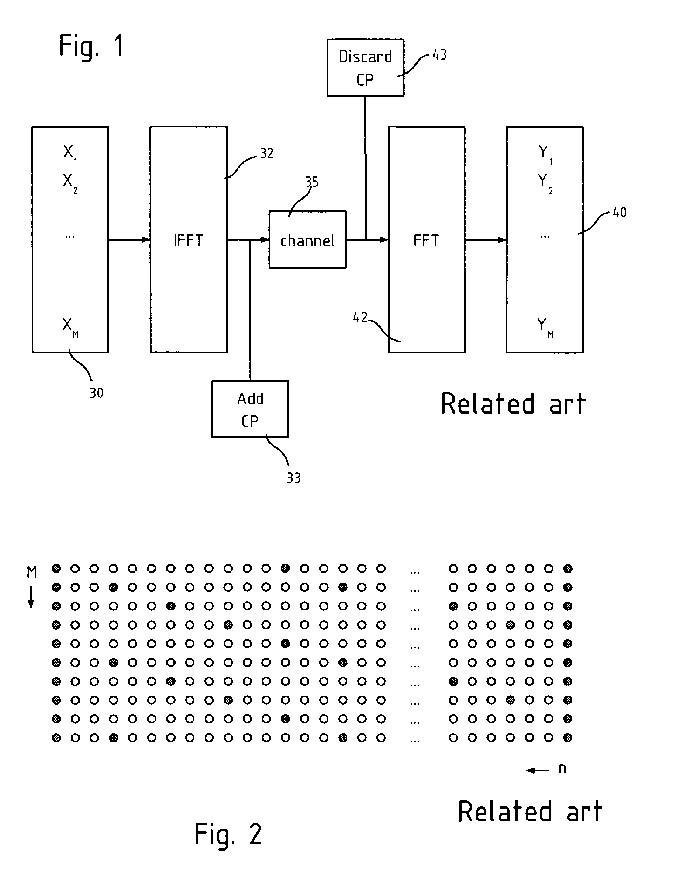

In a typical OFDM system, schematically represented in figure 1, the transmitter maps the data bits to into symbols belonging to a defined symbol constellation of the appropriate modulation scheme (e.g. QPSK, 16-QAM or 64-QAM), at a rate $1/T$. These are then grouped into OFDM frames of size $M$ (block 30). In particular the notation $X_m(n)$, $m = 1,2,..., M$ shall represent the symbol $m$ of the frame $n$.

In OFDM modulation, each of the elements $X_m(n)$ of one frame $n$ being transmitted by subcarrier number $m$. This is is performed by an $M$-size inverse Fourier transform (IFFT) in block 32. In order to reduce the complexity of the receiver the modulated data are completed (block 33) by a cyclic prefix (CP) (i.e., the last $N$ symbols of the IFFT output are replicated at the beginning of the OFDM-modulated frame before transmission). The transmission rate is $1/T_s = (N + M)/MT$. The signal is transferred to the receiver by a suitable channel (block 35).

At the receiver, the received signal is split, by detecting the repetition of the cyclic prefix, into frames of size $N + M$, corresponding to the transmitted frames. The first $N$ samples (corresponding to the CP) are discarded (block 43) and the following $M$ samples are transformed with a fast Fourier transform (FFT, block 42) to obtain the symbol $Y_m(n)$ for frame $n$ at sub-carrier $m$, with $m = 1,2,...,M$. The rate of $Y_m(n)$ is $M/T$.

Indicating with $\mathbf{Y}(n) = [Y_1(n), Y_2(n),..., Y_M(n)]^T$ the $M$-size vector of the received sample for the frame $n$, where $^T$ denotes transposition and with $X(n) = [X_1(n), X_2(n),..., X_M(n)]^T$ be the $M$-size vector of the transmitted symbols for the frame $n$, the received signal is equal to:

$$\mathbf{Y}(n) = \mathbf{H}(n)\mathbf{X}(n) + \mathbf{W}(n) \qquad\qquad (1)$$

Where $\mathbf{H}(n)$ is a matrix of size $(M \times M)$ containing the channel frequency response of channel 35 and $\mathbf{W}(n) = [W_1(n), W_2(n),..., W_M(n)]^T$ is the noise vector. Ideally, if the sub-carriers would not interfere with each other, $\mathbf{H}(n)$ would be a diagonal matrix, each received sub-carrier $Y_m$ being linked to a corresponding transmitted sub-carrier $X_m$ by a complex coefficient $H_{m,m}$. In general, a certain amount of inter-carrier interference is always present and $\mathbf{H}(n)$ will contain off-diagonal terms. In any case the receiver needs a reasonable estimate of $\mathbf{H}(n)$ to detect the transmitted symbol, with coherent modulations. To this end some subcarriers are reserved for the transmission of symbols that are known at the receiver and will be used to estimate the channel response. These subcarriers are called pilot tones. The size and structure of OFDM frames, and the position of pilot, are specified by different modulation standard, for example DVB-T, DVB-M, DAB, and so on. Figure 2 shows, schematically, the position of pilot signals prescribed by the DVB-T standard. The details of DVB implementation are defined by ETSI standards: EN 302 304; EN 300 744; EN 301 192; EN 300421.

The position of pilot tones may vary during the transmission. Let $p_0(n), p_1(n),..., p_{L-1}(n)$ be the positions of the pilots for the current transmitted OFDM symbol $n$ and let $S_{\ell}(n), \ell = 0,1,..., L - 1$ be the transmitted pilot subcarrier.

Several methods have been proposed for estimating the channels response from the pilot signals. According to the Least Square (LS) method, for example the values of **H**($n$) in correspondence with pilot tones are approximated by:

$$H_{p_\ell(n)}^{(LS)}(n) = \frac{Y_{p_\ell(n)}(n)}{S_\ell(n)} \quad \ell = 0, 1, \ldots, L-1 \tag{2}$$

Another known method, the Minimum Mean Square Error (MMSE) estimates the values of **H**($n$) for the pilot symbols as:

$$H_{p_\ell(n)}^{(MMSE)}(n) = \frac{Y_{p_\ell(n)}(n)S_\ell(n)^\star}{|S_\ell(n)|^2 + \sigma_w^2} \quad \ell = 0, 1, \ldots, L-1 \tag{3}$$

Other methods are also known in the art, for example methods based on Singular Value decomposition (SV).

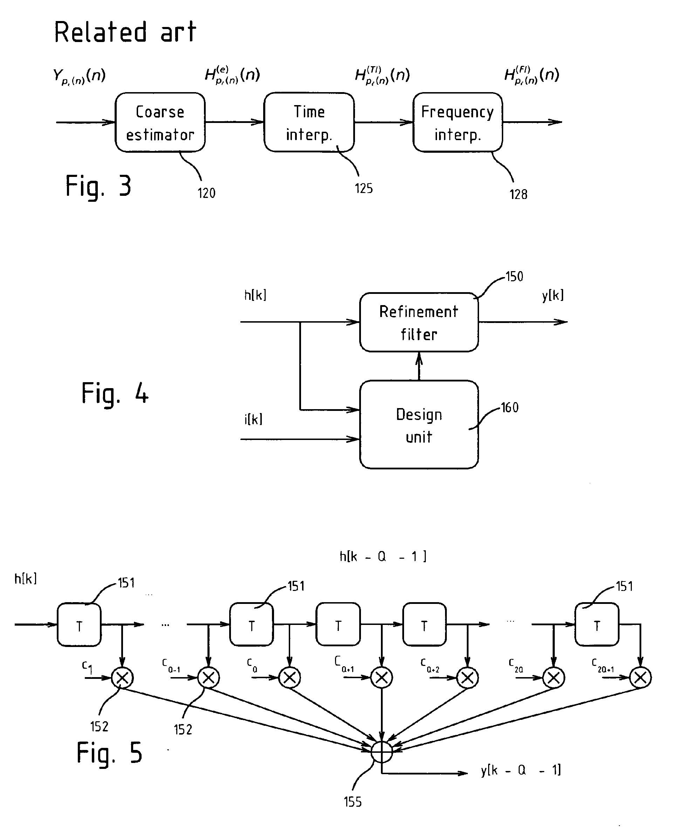

In order to obtain the channel estimation for all data carriers, time interpolation (TI) and frequency interpolation (FI) must be performed based on the estimated channel for pilot carriers, as shown in figure 3.

These known methods can not, in several cases, provide a precise estimate. In particular, the channel estimate they deliver may be affected by inter-channel interference (ICI). The consequence is an increase of the error rate and/or a reduction in the usable data bandwidth. It is an aim of the present invention to provide a method for estimating the channel-frequency response in a OFDM system that is better than the known methods.

The US patent No. 7 161 896 B1 discloses method and apparatus for estimating channel characteristics in an OFDM receiver. Rough estimates of the channel of each of the carriers are provided to an adaptive smoothing filter.

Brief summary of the invention

According to the invention, these aims are achieved by means of the method and device that are the object of the appended claims

Brief Description of the Drawings

The invention will be better understood with the aid of the description of an embodiment given by way of example and illustrated by the figures, in which:

Fig. 1 shows, in a simplified schematic way, the flow of data in a OFDM system.

Fig. 2 shows the position of pilot tones in the DVB-T standard.

Fig. 3 illustrates the succession of coarse channel estimation, time and frequency interpolation in a OFDM system

Fig. 4. shows, in a schematic block fashion, the refinement filter and design unit of one aspect of the present invention.

Fig. 5 illustrates schematically a refinement filter according to one aspect of the invention, implemented as FIR filter.

Fig. 6 illustrates schematically a refinement filter according to one aspect of the invention, implemented as IIR filter.

Fig. 7 illustrates schematically the functioning of the filter design module according to one aspect of the invention.

Figures. 8, 9 and 10 show possible locations of the refinement filter of the invention in the channel estimation process.

Detailed Description of possible embodiments of the Invention

Figure 3 shows the basic channel estimation scheme, where the coarse estimator block 120 refers to channel estimation on pilots (e.g. LS or MMSE or SVD), followed by the time interpolation 125 and the frequency interpolation 128. At the output of the coarse estimation we denote the estimation (e.g. LS, MMSE or SVD) as $H^{(e)}_{p_\ell(n)}(n)$, ($\ell$ = 0,1,..., $L$ - 1) for all pilot carriers. The time-interpolated estimate is indicated by $H^{(TI)}_{z_{i'}}(n)$ for all interpolated carriers, and the output of FI is denoted as $H^{(FI)}_m(n)$ ($m$ = 0,1,..., $M$ - 1) for all carriers.

According to an aspect of the present invention, the pilot based channel estimation is refined by a refining digital filter 150. The refinement filter can be inserted in any position of any channel estimation scheme. With reference to the scheme of figure 3, the refinement filter can be applied:

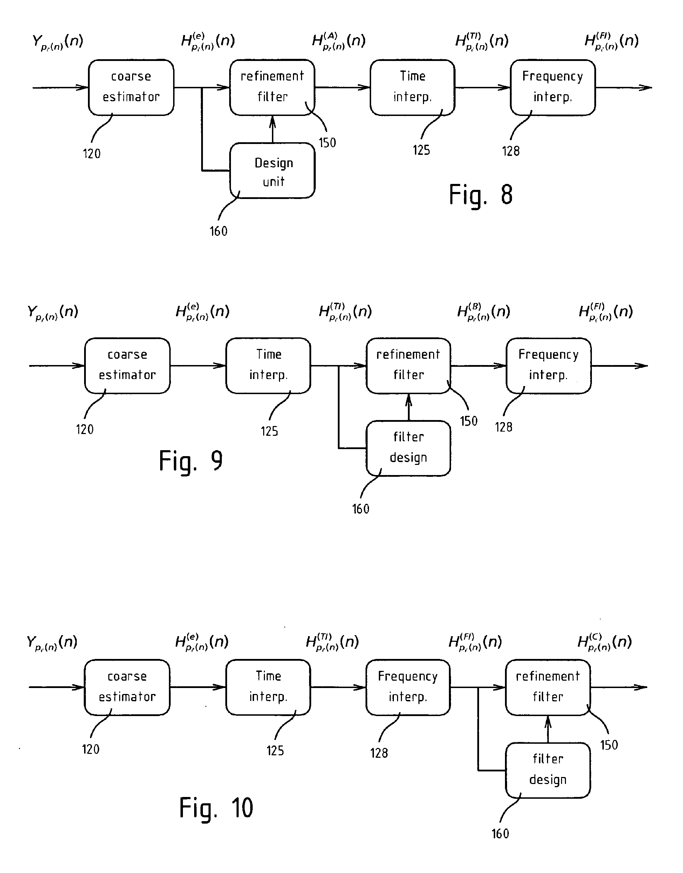

- After the Coarse Estimator (see Fig. 8).

- After the Time Interpolation (see Fig. 9).

- After the Frequency Interpolation (see 10).

Fig. 4 shows the scheme of the proposed method. The input of refinement estimation is the coarse Channel Estimation $h[k]$ and, when it is available, the Reliability Information $i[k]$.

The reliability of the estimated channel samples is an additional information to further increase the performances based on the fact that not all the estimated channel samples are equally reliable. The Reliability of each $h[k]$ samples is inversely proportional to the estimate's error, it can be computed in different ways on different architectures. The output of refinement estimation is the Fine Channel Estimation $y[k]$ .

According to the invention, a device for providing the Fine channel estimation comprises a refining digital filter, whose task is filtering the coarse channel estimation using the filter coefficients computed by a filter design unit.

According to a first embodiment of the present invention, illustrated in figure 5, the refinement filter is implemented as a Finite Impulse Response (FIR), represented, conventionally, by delay units 151, multipliers 152 and adder 155. The input of the FIR filter is the coarse Channel Estimation $h[k]$ and the filtering coefficients $c_1,...,c_{2Q+1}$ are obtained by the filter design unit. Even if the FIR filter is represented as a combination of delays and multipliers, actual implementation of the invention may depart from this structure. The FIR filter could also be implemented fully or partly by software modules.

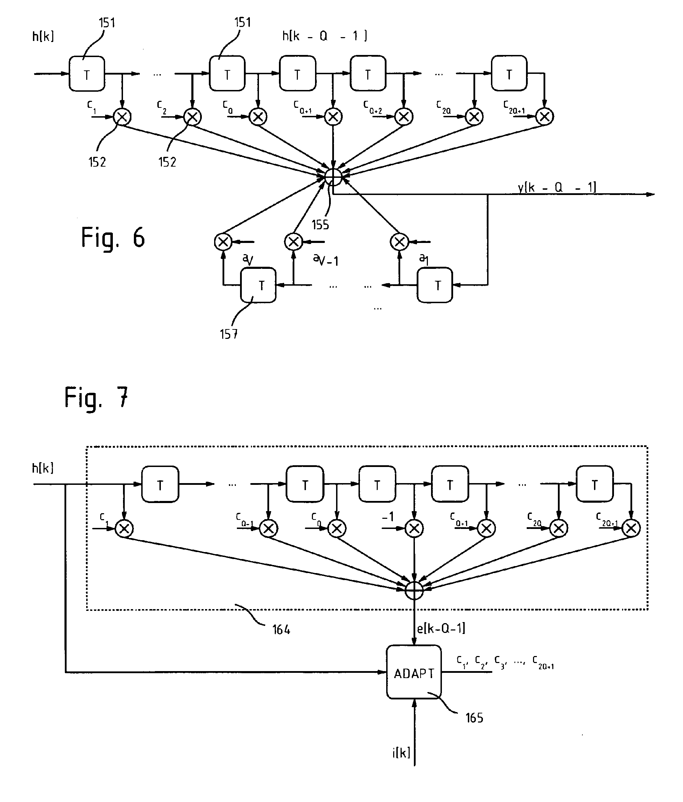

Figure 6 illustrates a variant of the invention, in which the refining filter is implemented as an IIR filter, as seen by the presence of the feedback delay line 157 and corresponding coefficients. Even in this case, many ways of implementing an IIR filter are known, and actual implementation of the invention may realize this kind of filter with an equivalent combination of hardware and/or software units.

The device of the invention also comprises a filter design unit 160 that computes the filter coefficients used by the Refinement Filter 150. The structure of the Filter Design unit is shown in Fig. 7. The filter design unit is responsive to the coarse Channel Estimation $h[k]$ and, when it is available, to the Reliability Information $i[k]$ and output the filtering coefficients $c_1,..., c_{2Q+1}$. The Filter Design computes the errors $e[k - Q - 1]$ on the prediction on the current pilots, for example based on the side pilots compared to the estimated value.

The adaptive unit 165 carries out the computation of the filter coefficients $c_1,...,c_{2Q+1}$ and has as input:

- The initial channel estimates $h$ on which the refinement is applied.

- The error $e[k - Q - 1]$ on the prediction on the pilot tones.

- The reliability information, $i[k]$.

The filter design unit comprises an error evaluation block 164, which computes the error on the prediction of a given pilot tone, based on the 2Q adjacent pilot tones. The structure of the error evaluation block illustrated in figure 7 refers to the case of the FIR filter of figure 5, and is obtained by imposing a value -1 to the central coefficient $c_{Q+1}$. If a different structure is chosen for the refining filter, for example an IIR filter as represented in figure 6, the error evaluation block shall be modified accordingly.

From the three inputs indicated above, the adaptation block 165 is operatively arranged to adapt the coefficients as to reduce the variance, or, eventually, the average of the error $e[k]$ weighted by $i[k]$. When the Reliability Information is not available the adaptive unit assumes that $h[k]$ have all the same reliability, and only $e[k]$ is taken into account for the computation of filter coefficients. This adaptation can be obtained, for example, by a least mean square (LMS) or recursive least square (RLS) or Kalman filter techniques. Other adaptation techniques are known in the art, and could be employed in the frame of the present invention.

The central coefficient $c_{Q+1}$ determines the relative weight of the central value as estimated from the coarse estimation, and from the adjacent pilots. It can be set according to any technique known in the field of adaptive filters.

In the present specification the filter design unit is presented as an assemblage of independent blocks separate from each other and from the refining filter, for clarity. It must be understood, however that, in embodiments of the invention, some elements of the filter design unit and of the refining filter may be shared in common, fully or in part, particularly when software elements are involved.

According to the presented example, the refining filter and filter design unit of the present invention compose an adaptive filter that self-adjusts its transfer function, as defined by the filter coefficients. Adaptive filters can be realized in many ways, all included in the scope of the invention, besides the presented examples.

Figures 8, 9 and 10 illustrate alternative positions for the refining filter of the invention. In the disposition illustrated in figure 8, the refining filter 150 is inserted before the time interpolator 125. We assume, to simplify the discussion, that the reliability information is not available.

The input of the refining filter 150 is the coarse channel estimator output for symbol $n : h[l] = H_{p_\ell(n)}^{(e)}(n)$, $\ell = 0, 1, \ldots, L - 1$. For the first Q and the last Q channel estimates we set $y[\ell] = H_{p_\ell(n)}^{(A)}(n) = H_{p_\ell(n)}^{(e)}(n)$, $\ell = 0, 1, ..., Q - 1$ and $\ell = L - Q, ..., L - 1$. In this case the reliability information is the same for all samples and the filter design unit 160 may provide updated filter coefficients at the same rate of the pilot samples.

According to the variant of figure 9, the refinement filter 15 is inserted after the time interpolator 125. Advantageously the Reliability Information can be generated by the Time Interpolator 125.

The $h[\ell]$ input is provided by channel estimates after time interpolation for symbol $n$, denoted as $H_{z_\ell}^{(TI)}(n)$, $\ell = 0, 1, \ldots, L_T - 1$:

$$h[\ell] = H_{z_\ell}^{(TI)}(n) \tag{4}$$

For the first Q and the last Q channel estimates we set $y[\ell] = H_{z_\ell}^{(TI)}(n)$, $\ell = 0, 1, .., Q\text{-}1$ and $\ell = L_T\text{-} Q, ..., L_T\text{-} 1$.

In this case, the filter coefficients are adapted by comparing the filtered output with the pilot samples, i.e. the adaptation rate is the rate of $H_{p_\ell(n)}^{(e)}(n)$ rather than the rate of $H_{z_\ell}^{(TI)}(n)$. Hence, if we let the reliability signal switch on and off the filter design unit in correspondence of the two values $i[\ell] = $ ON and $i[e] = $ OFF. The definition of $i[\ell]$ being that $i[\ell] = $ ON if for the current OFDM symbol (n-th) at the $z_\ell$ subcarrier there is a pilot tone, otherwise $i[\ell] = $ OFF .

## Claims

1. Method to estimate a channel-frequency response for an OFDM system in a DVB receiver, comprising the steps of:

   obtaining or calculating a coarse estimation ($h_k$) of the channel-frequency response based on pilot tones in the OFDM signal;
   computing an information ($i_k$) on reliability of the estimated channel samples of the coarse estimation;
   calculating a set of parameters ($c_1, ... c_{2Q+1}$) defining a refining digital filter;
   filtering the coarse estimation of the channel-frequency response according to the refining digital filter having said set of parameters to obtain a refined channel-frequency response estimation, wherein the refining digital filter is a FIR adaptive filter or a IIR adaptive filter and said step of calculating a set of parameters is based on the coarse channel-frequency response estimation and on said information on reliability, wherein the step of calculating the set of parameters defining the digital refining filter includes a computation of an average of errors ($e_k$) on the prediction of pilot tones, weighted by the information on reliability ($i_k$), adaptation of the filter coefficients ($c_1, ... c_{2Q+1}$) to reduce said average of the errors ($e_k$).

2. The method of any of the preceding claim, wherein the coarse estimation is based on a Least Square estimate, or on a Minimum Mean Square Error estimate, or on a Singular value Decomposition, or on linear combination of predefined filters.

3. The method of the preceding claim, wherein said adaptation is based on Least Mean Squares or Recursive Least Squares or Kalman Filter techniques.

4. A device for estimating a channel-frequency response in A DVB receiver for an OFDM system, comprising:

a coarse estimation unit, operatively arranged to derive a coarse channel frequency-response estimation ($h_k$) from a received OFDM signal based on pilot tones in the OFDM signal; and to compute an information on reliability ($i_k$) of the estimated channel samples of the coarse estimation;

a filter design unit, arranged to compute parameters ($c_1, ... c_{2Q+1}$) of a digital refining filter based on information dependent from the OFDM signal;

a refining digital filter, operating according to the parameters provided by the filter design unit, operatively arranged to filter the coarse channel estimation to provide a refined channel frequency-response estimation, wherein the refining digital filter is a FIR adaptive filter or a IIR adaptive filter and said filter design unit is responsive to the coarse channel-frequency response estimation and on said information on reliability, the filter design unit being operatively arranged to perform computation of an average of errors ($e_k$) on the prediction of pilot tones, weighted by the information on reliability ($i_k$), and adaptation of the filter coefficients ($c_1... c_{2Q+1}$) to reduce said average of errors ($e_k$).

5. The device of any of claims 7-8, wherein the coarse estimation is based on a Least Square estimate, or on a Minimum Mean Square Error estimate, or on a Singular value Decomposition, or on linear combination of predefined filters.

6. The device of the preceding claim, wherein said filter design unit is operatively arranged to carry out said adaptation based on Least Mean Squares or Recursive Least Squares or Kalman Filter techniques.


**Patentansprüche**

1. Verfahren zum Schätzen einer Kanalfrequenzantwort für ein OFDM System in einem DVB Empfänger, aufweisend die Schritte:

Erhalten oder Berechnen einer groben Schätzung ($h_k$) der Kanalfrequenzantwort basierend auf Pilottönen in dem OFDM Signal;

Berechnen einer Information ($i_k$) zu der Zuverlässigkeit der geschätzten Kanalsamples der groben Schätzung;

Berechnen einer Menge von Parametern ($c_1,..., c_{2Q+1}$), die einen digitalen Verfeinerungsfilter definieren;

Filtern der groben Schätzung der Kanalfrequenzantwort entsprechend dem die Menge der Parameter aufweisenden digitalen Verfeinerungsfilter, um eine verfeinerte Kanalfrequenzantwortschätzung zu erhalten, wobei der digitale Verfeinerungsfilter ein adaptiver FIR Filter oder ein adaptiver IIR Filter ist und der Schritt des Berechnens einer Menge von Parametern auf der groben Kanalfrequenzantwortschätzung und auf Informationen der Zuverlässigkeit basiert, wobei der Schritt des Berechnens der Menge von Parametern, die den digitalen Verfeinerungsfilter definieren, eine Berechnung eines mittleren Fehlers ($e_k$) der Vorhersage der Pilottöne, gewichtet durch die Information der Zuverlässigkeit ($i_k$), und die Anpassung der Filterkoeffizienten ($c_1, ..., c_{2Q+1}$), um die mittleren Fehler ($e_k$) zu reduzieren, aufweist.

2. Das Verfahren nach dem vorigen Anspruch, wobei die grobe Schätzung auf dem kleinsten Quadrate Schätzer oder einem minimalen mittleren quadratischen Fehlerschätzer oder einer singulären Wertezerlegung oder einer Linearkombination von vordefinierten Filtern basiert.

3. Das Verfahren nach dem vorigen Anspruch, wobei die Anpassung auf der kleinsten mittleren Quadrate oder rekursiven kleinsten Quadrate oder Kalman Filter Technik basiert.

4. Vorrichtung zum Schätzen einer Kanalfrequenzantwort in einem DVB Empfänger für ein OFDM System , aufweisend:

Eine Grobschätzeinheit, operativ ausgebildet eine grobe Kanalfrequenzantwortschätzung ($h_k$) von einem erhaltenen OFDM Signal basierend auf Pilottönen in dem OFDM Signal zu bestimmen; und eine Information ($i_k$) der Zuverlässigkeit der geschätzten Kanalsamples der groben Schätzung zu berechnen;

Eine Filterdesigneinheit ausgebildet eine Menge von Parametern ($c_1, ..., c_{2Q+1}$) eines digitalen Verfeinerungsfilter basierend auf Informationen, die von dem OFDM Signal abhängen, zu berechnen;

Ein digitaler Verfeinerungsfilter, der entsprechend der von der Filterdesigneinheit erhaltenen Parameter arbeitet und ausgebildet ist, die grobe Kanalfrequenzantwortschätzung zu filtern, um eine verfeinerte Kanalfrequenzantwortschätzung zu erhalten, wobei der digitale Verfeinerungsfilter ein adaptiver FIR Filter oder ein adaptiver IIR Filter ist und die Filterdesigneinheit auf der groben Kanalfrequenzantwortschätzung und auf Informationen der Zuverlässigkeit basiert, wobei die Filterdesigneinheit operativ ausgebildet ist, eine Berechnung eines mittleren Fehlers ($e_k$) der Vorhersage der Pilottöne, gewichtet durch die Information der Zuverlässigkeit ($i_k$), und die Anpassung der Filterkoeffizienten ($c_1, ..., c_{2Q+1}$), um die mittleren Fehler ($e_k$) zu reduzieren, durchzuführen.

5. Die Vorrichtung nach Anspruch 4, wobei die grobe Schätzung auf dem kleinsten Quadrate Schätzer oder einem minimalen mittleren quadratischen Fehlerschätzer oder einer singulären Wertezerlegung oder einer Linearkombination von vordefinierten Filtern basiert.

6. Die Vorrichtung nach dem vorigen Anspruch, wobei die Filterdesignvorrichtung operativ ausgebildet ist, die Anpassung auf der kleinsten mittleren Quadrate oder rekursiven kleinsten Quadrate oder Kalman Filter Technik basierend auszuführen.

## Revendications

1. Procédé d'estimation de réponse en fréquence de canal dans un système de multiplexage par répartition orthogonale de la fréquence (OFDM, orthogonal frequency division multiplexing) dans un récepteur de diffusion vidéonumérique (DVB, digital video broadcasting), comprenant les étapes de:

obtention ou calcul d'une estimation grossière ($h_k$) de la réponse en fréquence de canal sur la base de fréquences pilotes dans le signal OFDM;
calcul d'une information ($i_k$) sur la fiabilité des échantillons de canal estimés de l'estimation grossière;
calcul d'un jeu de paramètres ($c_1, ... c_{2Q+1}$) définissant un filtre numérique d'affinage;
filtrage de l'estimation grossière de la réponse en fréquence de canal en fonction du filtre numérique d'affinage possédant ledit jeu de paramètres pour obtenir une estimation affinée de réponse en fréquence de canal, dans lequel le filtre numérique d'affinage est un filtre adaptatif à réponse impulsionnelle finie (FIR, finite impulse response) ou un filtre adaptatif à réponse impulsionnelle infinie (IIR, infinite impulse response) et ladite étape de calcul d'un jeu de paramètres se base sur l'estimation grossière de réponse en fréquence de canal et sur ladite information sur la fiabilité, dans lequel l'étape de calcul du jeu de paramètres définissant le filtre numérique d'affinage comprend le calcul d'une moyenne d'erreurs ($e_k$) sur la prédiction des fréquences pilotes, pondérée par l'information sur la fiabilité ($i_k$), l'adaptation de coefficients de filtre ($c_1, ... c_{2Q+1}$) pour réduire ladite moyenne des erreurs ($e_k$).

2. Le procédé de la revendication précédente, dans lequel l'estimation grossière est basée sur l'estimation par moindres carrés ou sur une estimation d'erreur quadratique moyenne minimum, ou sur une décomposition en valeurs singulières, ou sur une combinaison linéaire de filtres prédéfinis.

3. Le procédé de la revendication précédente, dans lequel ladite adaptation est basée sur les moindres carrés moyens ou sur les moindres carrés récursifs ou sur des techniques de filtre de Kalman.

4. Dispositif pour l'estimation d'une réponse en fréquence de canal dans un récepteur DVB pour un système OFDM, comprenant :

une unité d'estimation grossière, disposée opérationnellement pour dériver une estimation grossière ($h_k$) de la réponse en fréquence de canal à partir d'un signal reçu OFDM sur la base de fréquences pilotes dans le signal OFDM; et pour calculer une information ($i_k$) sur la fiabilité des échantillons de canal estimés de l'estimation grossière;
une unité de design de filtre, disposée pour calculer des paramètres ($c_1, ... c_{2Q+1}$) d'un filtre numérique d'affinage sur la base d'informations dépendantes du signal OFDM;
un filtre numérique d'affinage, fonctionnant selon les paramètres fournis par l'unité de design de filtre, disposé opérationnellement pour filtrer l'estimation grossière de canal pour fournir une estimation affinée de réponse en fréquence de canal, dans lequel le filtre numérique d'affinage est un filtre adaptatif FIR ou un filtre adaptatif IIR et ladite unité de design de filtre réagit à l'estimation grossière de réponse en fréquence de canal et à ladite information sur la fiabilité, l'unité de design de filtre étant disposée opérationnellement pour effectuer le calcul d'une moyenne d'erreurs ($e_k$) sur la prédiction des fréquences pilotes, pondérée par l'information sur la fiabilité ($i_k$), l'adaptation de coefficients de filtre ($c_1, ... c_{2Q+1}$) pour réduire ladite moyenne des erreurs ($e_k$).

**5.** Le dispositif de la revendication 4, dans lequel l'estimation grossière est basée sur l'estimation par moindres carrés ou sur une estimation d'erreur quadratique moyenne minimum, ou sur une décomposition en valeurs singulières, ou sur une combinaison linéaire de filtres prédéfinis

**6.** Le dispositif de la revendication précédente, dans lequel ladite unité de design de filtre est disposée opérationnellement pour effectuer ladite adaptation basée sur les moindres carrés moyens ou sur les moindres carrés récursifs ou sur des techniques de filtre de Kalman.

## Fig. 1

Discard CP — 43

X₁
X₂
...
X_M

30

IFFT — 32

channel — 35

FFT

42

Y₁
Y₂
...
Y_M

40

Add CP

33

**Related art**

## Fig. 2

M ↓

n ←

**Related art**

Related art

$Y_{p,(n)}(n)$        $H^{(e)}_{p_r(n)}(n)$        $H^{(TI)}_{p_r(n)}(n)$        $H^{(FI)}_{p_r(n)}(n)$

Coarse estimator    Time interp.    Frequency interp.

Fig. 3      120      125      128

Fig. 4

150

$h[k]$    Refinement filter    $y[k]$

$i[k]$    Design unit    160

$h[k - Q - 1]$

$h[k]$    151    151    151

T   ...   T   T   T   ...   T

$c_1$   $c_{Q-1}$   $c_Q$   $c_{Q+1}$   $c_{Q+2}$   $c_{2Q}$   $c_{2Q+1}$

152    152

Fig. 5

$y[k - Q - 1]$

155

Fig. 6

Fig. 7

$Y_{p_r(n)}(n)$      $H^{(e)}_{p_r(n)}(n)$      $H^{(A)}_{p_r(n)}(n)$      $H^{(TI)}_{p_r(n)}(n)$      $H^{(FI)}_{p_r(n)}(n)$

| coarse estimator | refinement filter | Time interp. | Frequency interp. |

120      150      125      128

Design unit

160

**Fig. 8**

$Y_{p_r(n)}(n)$      $H^{(e)}_{p_r(n)}(n)$      $H^{(TI)}_{p_r(n)}(n)$      $H^{(B)}_{p_r(n)}(n)$      $H^{(FI)}_{p_r(n)}(n)$

| coarse estimator | Time interp. | refinement filter | Frequency interp. |

120      125      150   128

filter design

160

**Fig. 9**

$Y_{p_r(n)}(n)$      $H^{(e)}_{p_r(n)}(n)$      $H^{(TI)}_{p_r(n)}(n)$      $H^{(FI)}_{p_r(n)}(n)$      $H^{(C)}_{p_r(n)}(n)$

| coarse estimator | Time interp. | Frequency interp. | refinement filter |

120      125      128      150

filter design

160

**Fig. 10**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 07106730 A
- US 7161896 B1